# EUROPÄISCHE PATENTANMELDUNG

(11) **EP 0 775 520 A2**
(43) Veröffentlichungstag der Anmeldung: **28.05.1997**
(21) Anmeldenummer: 96118306.8
(22) Anmeldetag: 15.11.1996
(51) Int. Cl.: B01J 29/04, C01B 33/18

(54) **Mesoporöse Molekularsiebe**

(30) Priorität: 23.11.1995 DE 19543638
(71) Anmelder: BASF AKTIENGESELLSCHAFT, 67056 Ludwigshafen (DE)
(72) Erfinder: Müller, Ulrich, Dr., 67434 Neustadt (DE); Ciesla, Ulrike, 55118 Mainz (DE); Schueth, Ferdi, Dr., 55118 Mainz (DE); Unger, Klaus, Prof. Dr., 64342 Seeheim-Jugenheim (DE); Stucky, Galen D., Prof. Dr., 93111 Santa Barbara, CA (US)

(57) **Zusammenfassung**

Mesoporöse Molekularsiebe, hergestellt aus Tensiden und Isopoly- oder Heteropolykationen von Metalloxiden der Gruppen IIIa, IIb, IIIb, IVb, Vb, VIb, VIIb des Periodensystems der Elemente, Be, Sn, Pb, Sb, Bi, Cu, Fe, Co, Ni, Ce, Eu, Th, U oder deren Gemischen, indem man die mesoporösen Molekularsiebe mit Sauerstoffsäuren, Oxiden, Komplexsalzen oder deren Gemischen von Phosphor, Schwefel, Niob, Tantal, Wolfram, Ruthenium, Rhodium, Palladium, Osmium, Iridium, Platin oder deren Gemische behandelt.

## Beschreibung

Die vorliegende Erfindung betrifft mesoporöse Molekularsiebe, die aus Tensiden und Isopoly- oder Heteropolykationen von Metalloxiden der Gruppen IIIa, IIb, IIIb, IVb, Vb, VIb, VIIb des Periodensystems der Elemente, Beryllium, Zinn, Blei, Antimon, Wismut, Kupfer, Eisen, Cobalt, Nickel, Cer, Europium, Thorium, Uran oder deren Gemischen durch Behandlung mit Sauerstoffsäuren, Oxiden, Komplexsalzen oder deren Gemischen von Phosphor, Schwefel, Niob, Tantal, Wolfram, Ruthenium, Rhodium, Palladium, Osmium, Iridium, Platin oder deren Gemische erhältlich sind.

Aus der WO-A-91/11390 sind mesoporöse Molekularsiebe mit einer den Silikaten und Alumosilikaten verwandten chemischen Zusammensetzung bekannt. Die Synthese dieser Materialien mit der Bezeichnung MCM-41 erfolgt durch Umsetzung von Metallsalzen mit kationischen Tensiden wie etwa Hexadecyltrimethylammonium in Form flüssigkristalliner Anordnungen wie Schablonen bei der Kondensation des Silikatgerüstes.

Der Vorteil dieser Stoffe ergibt sich aus einer Kombination aus hoher Festkörperoberfläche, großem Porenvolumen und einer regelmäßigen Anordnung des Silikat- oder Alumosilikatgerüstes zu Poren im Bereich der Mesoporen von ca. 1,5 bis ca. 10 nm. Damit liegen regelmäßig strukturierte Porenoffnungsweiten vor, die deutlich größer sind als diejenigen von beispielsweise bekannten Zeolithen oder zeolithanalogen Alumophosphaten (Atlas of Zeolite Structure Types, Butterworths, 1978 und J. Am. Chem. Soc. 114 (1992) 10834 bis 10843 sowie die dort angegebene Literatur).

Als Anwendungen der mesoporöse Molekularsiebe nennt WO-A-91/11390 die katalytische Umwandlung von Kohlenwasserstoffen in Crack- oder Hydrocrackreaktionen und in der Umwandlung von Stickoxiden, sowie zur selektiven Adsorption von Komponenten aus Mischungen.

Nachteilig erscheint, daß man bei der Zusammensetzung dieser neuartigen Materialien auf Silikat und Alumosilikat beschränkt bleibt. Zudem wird die von Zeolithen bekannte hohe Acidität nicht erreicht, so daß eine Verwendung in der sauren Heterogenkatalyse fraglich erscheint.

Der vorliegenden Erfindung lag daher die Aufgabe zugrunde, den zuvor genannten Nachteilen abzuhelfen.

Demgemäß wurden neue und verbesserte mesoporöse Molekularsiebe, hergestellt aus Tensiden und Isopoly- oder Heteropolykationen von Metalloxiden der Gruppen IIIa, IIb, IIIb, IVb, Vb, VIb, VIIb des Periodensystems der Elemente, Beryllium, Zinn, Blei, Antimon, Wismut, Kupfer, Eisen, Cobalt, Nickel, Cer, Europium, Thorium, Uran oder deren Gemischen gefunden, welche dadurch gekennzeichnet sind, daß man die mesoporösen Molekularsiebe mit Sauerstoffsäuren, Oxiden, Komplexsalzen oder deren Gemischen von Phosphor, Schwefel, Niob, Tantal, Wolfram, Ruthenium, Rhodium, Palladium, Osmium, Iridium, Platin oder deren Gemische behandelt.

Im Gegensatz zu MCM-41 - in dem kationische Tenside ein Festkörper-Anionengitter bewirken - wird eine sehr viel breitere Variabilität erreicht, wenn man anionische oder nicht-ionische Tenside z.B. in wäßrigen oder alkoholischen Systemen einsetzt, um damit Festkörper-Kationengitter zu erhalten. Die zusätzliche Behandlung - beispielsweise Tränkung, Besprühen, kontinuierliche Waschung - der mesoporösen - z.B. aus EP-A-670 286 bekannten - Molekularsiebe mit Sauerstoffsäuren oder deren Ammoniumsalzen von Phosphor, Schwefel, Niob, Tantal, Wolfram, Ruthenium, Rhodium, Palladium, Osmium, Iridium, Platin oder deren Gemische wie Phosphorsäure, Phosphorige Säure, Schwefelsäure, Schweflige Säure, Heteropolysäuren wie Heteropolywolframatophosphorsäure, Heteropolywolframatokieselsäure, Hexachloroplatinsäure, Polyphosphorsäure, tert.-Butylammoniumwolframat und tert.-Butylammoniumruthenat, bevorzugt Phosphorsäure, Schwefelsäure, schweflige Säure und phosphorige Säure, besonders bevorzugt Phosphorsäure und Schwefelsäure.

Zur Behandlung der mesoporösen Molekularsiebe mit Sauerstoffsäuren oder deren Ammoniumsalzen setzt man in der Regel wäßrige Lösungen mit 0,1 bis 20 Gew.-% bezogen auf die freie Säure ein, Im Falle von Phosphor und Schwefel eignen sich bevorzugt wäßrige Lösungen mit 5 bis 15 Gew.-% bezogen auf die freie Säure und im Falle von Niob, Tantal, Wolfram, Ruthenium, Rhodium, Palladium, Osmium, Iridium und Platin sind wäßrige Lösungen mit 0,1 bis 5 Gew.-% bezogen auf die jeweiligen Elemente bevorzugt.

Man kann die Tenside oder deren Salze bei Temperaturen von 20 bis 180°C, bevorzugt 40 bis 90°C in wäßrigen oder alkoholischen (C₁- bis C₈-Alkanole, bevorzugt C₁- bis C₄-Alkanole, besonders bevorzugt Methanol und Ethanol) Lösungen, bevorzugt den wäßrigen Lösungen oberhalb ihrer kritischen Mizellkonzentration (M. Hoffmann, H. Kröner, R. Kuhn, Polymeranalytik II, S. 266 bis 267, Thieme Verlag, Stuttgart, 1977) vorlegen, wobei sich in der Regel selbst organisierte Spezies, beispielsweise Mizellen ausbilden und diese mithin als Schablone zur Strukturierung dienen.

Erfindungsgemäß kann man die folgenden Elemente IIIa, IIb, IIIb, IVb, Vb, VIb, VIIb des Periodensystems der Elemente, Beryllium, Zinn, Blei, Antimon, Wismut, Kupfer, Eisen, Cobalt, Nickel, Cer, Europium, Thorium, Uran oder deren Gemischen, bevorzugt Beryllium, Bor, Aluminium, Gallium, Indium, Zinn, Blei, Antimon, Wismut, Scandium, Yttrium, Lathan, Titan, Zirkon, Hafnium, Vanadin, Niob, Tatal, Chrom, Molybdän, Wolfram, Mangan, Eisen, Cobalt, Nickel, Kupfer, Zink, Cadmium, Quecksilber, Cer, Europium, Thorium, Uran oder deren Gemische, besonders bevorzugt Beryllium, Bor, Aluminium, Gallium, Indium, Zinn, Blei, Wismut, Titan, Zirkon, Hafnium, Vanadin, Niob, Tatal, Chrom, Molybdän, Wolfram, Mangan, Eisen, Cobalt, Nickel, Kupfer, Zink, Cadmium, Quecksilber, Cer oder deren Gemische zugeben. Zur Herstellung der Isopoly- oder Heteropolykationen dieser Elemente eignen sich deren Sulfate, Phosphate, Nitrate, Carbonate, Halogenide und Perchlorate, sowie leicht hydrolysierbare metallorganische Verbindungen wie etwa Alkoholate, Chelate, Carboxylate, bevorzugt Sulfate, Phosphate und Nitrate, besonders bevorzugt Sulfate und Nitrate.

Bei der Herstellung der mesoporösen Molekularsiebe ist es wichtig, beim Lösen der Ausgangsverbindungen einen Bereich des pH-Werts einzuhalten, von dem bekannt ist, daß dort die Bildung von Isopoly- oder Heteroisopolykationen begünstigt ist [Chemie in unserer Zeit, 13 (1979) 184 bis 194; The hydrolysis of cations, Wiley (1976)]. Beispiele dafür sind etwa pH 3 bis 6 für Zirkonium-Isopolykationen, pH 4 bis 12 für Wismut-Isopolykationen oder pH 3 bis 6 für Eisen-Isopolykationen. Diese Bereiche können sich, da es sich prinzipiell um Hydrolysegleichgewichte handelt, als Folge der Konzentration verschieben. Experimentell lassen sich solche bevorzugten Bereiche durch Titrationen und Messung der elektrischen Leitfähigkeiten oder durch Messung der Färbung der Lösung verfolgen.

Die Kristallisation der erfindungsgemäßen Oxide kann in der Regel bei Temperaturen von 20 bis 250°C, bevorzugt 50 bis 150°C, besonders bevorzugt 70 bis 120°C und einem Druck von 0,01 bis 50 bar, bevorzugt 0,1 bis 5 bar, besonders bevorzugt bei 0,5 bis 3 bar durchgeführt werden. Je nach dem sich einstellenden Dampfdruck kann es vorteilhaft sein, insbesondere bei Temperaturen oberhalb von 90°C Druckreaktionsbehälter zu verwenden.

Die Dauer der Kristallisation kann zwischen wenigen Minuten bis zu mehreren Tagen betragen, bevorzugt je nach Temperatur und Konzentration an Einsatzstoffen jedoch im Bereich von 12 bis 96 Stunden.

Nach der Kristallisation können die entstandenen Produkte noch erhebliche Mengen an Tensid enthalten. Zur Entfernung können die aus der Zeolith-Synthese bekannten Verfahrensweisen der thermischen Zersetzung oder des Extrahierens mit Lösemitteln oder der Behandlung mit Wasserdampf bei erhöhter Temperatur eingesetzt werden. Thermoanalytische Messungen an kleinen Probenmengen können als Vortest dienen, um die Temperaturen so zu wählen, daß zwar das Tensid entfernt aber die Oxidstruktur durch die thermische Behandlung nicht geschädigt wird.

Die temperaturbehandelten Proben können als Katalysatoren oder Katalysatorträger in verformter oder nichtverformter Gestalt eingesetzt werden. Dabei können an sich bekannte Bindemittel wie Tone, Siliciumdioxid, Titandioxid, Aluminiumoxid, Graphit oder Zirkondioxid verwendet werden.

Als anionische Tenside (Ullmanns Encyklopädie der Technischen Chemie, 4. Auflage, Band 22, Seiten 467 bis 500) eignen sich Verbindungen der allgemeinen Formel I R - X in der X für COO⁻Y⁺, OSO₃⁻Y⁺, SO₃⁻Y⁺, OPO₃⁻Y⁺, PO₃⁻Y⁺, COCH, SO₄²⁻, SO₃²⁻, PO₄³⁻oder PO₃³⁻, Y für ein Element der Gruppe Ia des Periodensystems der Elemente wie Lithium, Natrium, Kalium, Rubidium, Cäsium oder Francium, bevorzugt Lithium, Natrium oder Kalium, besonders bevorzugt Natrium oder Kalium steht und R für R¹, (CH₂)ₙ-R² oder CHR³R⁴ steht, wobei R¹ C₆- bis C₆₀-Alkyl, bevorzugt C₈- bis C₅₀-Alkyl, besonders bevorzugt C₉- bis C₄₅-Alkyl, R² NR⁵-CO-R¹, NR⁵-SO₂-CHR¹R¹, OR¹, SR¹, SO₂-R¹, OOC-R¹, C₇- bis C₆₀-Alkylaryl, bevorzugt C₁₀- bis C₅₀-Alkylaryl, besonders bevorzugt C₁₂- bis C₄₅-Alkylaryl oder C₇- bis C₆₀-Alkylaryloxy, bevorzugt C₁₀- bis C₅₀-Alkylaryloxy, besonders bevorzugt C₁₂- bis C₄₅-Alkylaryloxy und R³ und R⁴ unabhängig voneinander C₆- bis C₆₀-Alkyl, bevorzugt C₈- bis C₅₀-Alkyl, besonders bevorzugt C₉- bis C₄₅-Alkyl, COOR¹ oder CH₂-COOR¹ und R⁵ Wasserstoff oder C₁- bis C₄-Alkyl, bevorzugt Methyl oder Ethyl, besonders bevorzugt Methyl und n 1 bis 10, bevorzugt 1 bis 6, besonders bevorzugt 1 bis 4, wie 1, 2, 3 und 4, bedeuten.

Als anionische Tenside seien beispielhaft Carboxylate, wie carboxymethylierte Oxethylate oder Derivate von Aminosäuren, Sulfonate, wie Ligninsulfonate, Alkylbenzolsulfonate, Alkylnaphthalinsulfonate, Alkylsulfonate, Olefinsulfonate, Sulfofettsäureester, Sulfofettsäureamide, Sulfobernsteinsäureester, Alkoxyalkylsulfonate, Acyloxyalkylsulfonate oder Acylaminoalkylsulfonate, Sulfate, wie Alkylsulfate oder Ethersulfate, Phosphonate oder Phosphate genannt.

Die erfindungsgemäßen mesoporösen Molekularsiebe eignen sich als Katalysatoren für Oxyfunktionalisierungen von Kohlenwasserstoffen, Oxidationen von Olefinen zu Oxiranen, Aromaten zu Hydroxyaromaten, Alkanen zu Alkoholen, Alkoholen zu Aldehyden, sekundären Alkoholen zu Ketonen durchgeführt werden. Ebenso kommen Hydrierungen und Dehydrierungen, Polymerisationsreaktionen, Aminierungen, Hydratisierungen und Dehydratisierungen, nukleophile und elektrophile Substitutionsreaktionen, Additions- und Eliminationsreaktionen, Doppelbindungs- und Skelettisomerisierungen, Dehydrocyclisierungen, Hydroxylierungen von Heteroaromaten, Epoxidierungen, Epoxid-Aldehyd-Umlagerungen, sowie Kondensationsreaktionen wie Aldolkondensationen in Betracht.

Je nach Molekül kann die Umsetzung in Gas- oder Flüssigphase bei Temperaturen von 20 bis 400°C, bevorzugt 50 bis 350°C, besonders bevorzugt 100 bis 300°C und einem Druck von 0,001 bis 200 bar, bevorzugt 0,01 bis 100 bar, besonders bevorzugt 0,1 bis 50 bar erfolgen.

Desaktivierte Katalysatoren aus den erfindungsgemäßen mesoporösen Molekularsieben können durch kontrolliertes Abbrennen von Kohlenstoffbelegungen wieder in eine katalytisch aktive Form zurückgeführt werden.

Aufgrund der entstehenden hohen Oberflächen von 100 bis 1500 m²/g, bevorzugt 300 bis 1000 m²/g, besonders bevorzugt 450 bis 800 m²/g der erfindungsgemäßen mesoporösen Molekularsiebe ist es ratsam beim Umgang mit diesen mesoporösen Molekularsieben dafür Sorge zu tragen, daß pyrophores Verhalten verhindert wird, beispielsweise durch Inertisierung mit einem geeigneten Gas oder Lösemittel.

Die erfindungsgemäßen mesoporösen Molekularsiebe eignen sich als Katalysatoren, als Trägermaterialien für Katalysatoren, als Einsatzstoffe zur Herstellung von Oxidkeramiken, als Sorbentien, als Pigment, in elektronischen, optischen oder elektrooptischen Bauteilen, Schaltelementen oder Sensoren und in Membranen und/oder zur Stofftrennung.

### Beispiele

### Herstellung eines phosphatstabilisierten Zinkoxids

### Beispiel 1

4,55 g Zr(SO₄)₂ · 4H₂O in 15 ml Wasser wurden zu einer Lösung aus 2,5 g (6,87 · 10⁻³ mol) Hexadecyltrimethylammoniumhromid (CTAB) und 85 g Wasser zugefügt, 2 Stunden bei Raumtemperatur gerührt und 2 Tage bei 100°C in einem geschlossenen Gefäß gehalten. Der gefilterte und getrocknete Niederschlag wurde 2 Stunden in einer 0,87 molaren H₃PO₄-Lösung gerührt, anschließend filtriert, getrocknet und bei 500°C 5 Stunden calciniert.

Das entstandene calcinierte Produkt hatte eine spezifische Oberfläche nach BET aus Stickstoffsorptionsmessungen bei 77 K von 230 m²/g. Der (100)-Reflex nach Calcinierung im Röntgendiffraktogramm lag bei 2,8 nm.

### Beispiel 2

Analog Beispiel 1 wurde Octadecyltrimethylammoniumbromid eingesetzt.

Das entstandene calcinierte Produkt hatte eine spezifische Oberfläche nach BET aus Stickstoffsorptionsmessungen bei 77 K von 320 m²/g. Der (100)-Reflex nach Calcinierung im Röntgendiffraktogramm lag bei 3,3 nm.

### Beispiel 3

Analog Beispiel 1 wurde Eicosantrimethylammoniumbromid eingesetzt.

Das entstandene calcinierte Produkt hatte eine spezifische Oberfläche nach BET aus Stickstoffsorptionsmessungen bei 77 K von 388 m²/g. Der (100)-Reflex nach Calcinierung im Röntgendiffraktogramm lag bei 3,8 nm.

### Beispiel 4 (nicht erfindungsgemäß)

61,5 g Titanoxidsulfathydrat in 450 ml Wasser wurden zu einer Lösung aus 75 g Hexadecyltrimethylammoniumbromid (CTAB) und 2550 g Wasser zugefügt, 2 Stunden bei Raumtemperatur gerührt und 3 Tage bei 100°C unter autogenem Druck gehalten. Der gefilterte und bei 50°C i.Vak. getrocknete Niederschlag wurde bei 500°C 5 Stunden calciniert.

Das entstandene calcinierte Produkt hatte eine spezifische Oberfläche nach BET aus Stickstoffsorptionsmessungen bei 77 K von 220 m²/g bei einem Porenvolumen von 0,27 ml/g.

## Patentansprüche

1. Mesoporöse Molekularsiebe, hergestellt aus Tensiden und Isopoly- oder Heteropolykationen von Metalloxiden der Gruppen IIIa, IIb, IIIb, IVb, Vb, VIb, VIIb des Periodensystems der Elemente, Beryllium, Zinn, Blei, Antimon, Wismut, Kupfer, Eisen, Cobalt, Nickel, Cer, Europium, Thorium, Uran oder deren Gemischen, dadurch gekenzeichnet, daß man die mesoporösen Molekularsiebe mit Sauerstoffsäuren, Oxiden, Komplexsalzen oder deren Gemischen von Phosphor, Schwefel, Niob, Tantal, Wolfram, Ruthenium, Rhodium, Palladium, Osmium, Iridium, Platin oder deren Gemische behandelt.

2. Mesoporöse Molekularsiebe nach Anspruch 1, dadurch gekennzeichnet, daß man Mischungen aus Tensiden und Isopoly- oder Heteropolykationen der Metalloxiden bei Temperaturen von 20 bis 250°C und einem Druck von 0,01 bis 50 bar kristallisiert.

3. Mesoporöse Molekularsiebe nach Anspruch 1, dadurch gekennzeichnet, daß man Mischungen aus Tensiden und Isopoly- oder Heteropolykationen der Metalloxiden bei Temperaturen von 50 bis 150°C und einem Druck von 0,1 bis 5 bar kristallisiert.

4. Mesoporöse Molekularsiebe nach Anspruch 1, dadurch gekennzeichnet, daß man Mischungen aus Tensiden und Isopoly- oder Heteropolykationen der Metalloxiden in wässrigen Systemen kristallisiert.

5. Mesoporöse Molekularsiebe nach Anspruch 1, dadurch gekennzeichnet, daß man als Metalle in den Isopoly- oder Heteropolykationen der Metalloxide Beryllium, Bor, Aluminium, Gallium, Indium, Zinn, Blei, Antimon, Wismut, Scandium, Yttrium, Lathan, Titan, Zirkon, Hafnium, Vanadin, Niob, Tatal, Chrom, Molybdän, Wolfram, Mangan, Eisen, Cobalt, Nickel, Kupfer, Zink, Cadmium, Quecksilber, Cer, Europium, Thorium, Uran oder deren Gemische einsetzt.

6. Mesoporöse Molekularsiebe nach Anspruch 1, dadurch gekennzeichnet, daß man als Metalle in den Isopoly- oder Heteropolykationen der Metalloxide Beryllium, Bor, Aluminium, Gallium, Indium, Zinn, Blei, Wismut, Titan, Zirkon, Hafnium, Vanadin, Niob, Tatal, Chrom, Molybdän, Wolfram, Mangan, Eisen, Cobalt, Nickel, Kupfer, Zink, Cadmium, Quecksilber, Cer oder deren Gemische einsetzt.

7. Mesoporöse Molekularsiebe nach Anspruch 1, dadurch gekennzeichnet, daß man als Tenside Verbindungen der allgemeinen Formel I
R - X (I),
in der
X COO⁻Y⁺, OSO₃⁻Y⁺, SO₃⁻Y⁺, OPO₃⁻Y⁺, PO₃⁻Y⁺, COOH, SO₄²⁻, SO₃²⁻, PO₄³⁻ oder PO₃³⁻,
Y ein Element der Gruppe Ia oder IIa des Periodensystems der Elemente
R R¹, (CH₂)ₙ-R² oder CHR³R⁴,
R¹ C₆- bis C₆₀-Alkyl,
R² NR⁵-CO-R¹, NR⁵-SO₂-CHR¹R¹, OR¹, SR¹, SO₂-R¹, OOC-R¹, C₇-bis C₆₀-Alkylaryl, oder C₇- bis C₆₀-Alkylaryloxy,
R³,R⁴ unabhängig voneinander C₆- bis C₆₀-Alkyl, COOR¹ oder CH₂-COOR¹ und
R⁵ Wasserstoff oder C₁- bis C₄-Alkyl,
n 1 bis 10
bedeuten, einsetzt.

8. Mesoporöse Molekularsiebe nach Anspruch 1, mit aus Beugungsaufnahmen ermittelten d-Werten einer indizierten hexagonalen Einheitszelle von mindestens 2,6 nm für (10)-Reflexe einer zweidimensionalen P6-Symetrie.

9. Mesoporöse Molekularsiebe nach Anspruch 1, mit aus Beugungsaufnahmen ermittelten d-Werten als Schichtebenenabstand von mindestens 1.8 nm.

10. Verwendung der mesoporöse Molekularsiebe nach Anspruch 1 als Katalysatoren, Katalysatorträger, Sorbentien, Pigmente, zur Herstellung von Oxidkeramiken, in elektronischen, optischen oder elektrooptischen Bauteilen, Schaltelementen oder Sensoren, in Membranen und/oder zur Stofftrennung.
